# FASCICULE DE BREVET EUROPEEN

(11) **EP 2 257 208 B1**
(45) Date de publication et mention de la délivrance du brevet: **01.10.2014**
(21) Numéro de dépôt: 09726333.9
(22) Date de dépôt: 10.03.2009
(51) Int. Cl.: A47J 31/60, A47J 31/44, B67D 1/07

(54) **PROCEDE DE NETTOYAGE D'UNE BUSE VAPEUR D'UNE MACHINE POUR LA PREPARATION DE BOISSONS**
VERFAHREN ZUR REINIGUNG DER DAMPFDÜSE EINER MASCHINE ZUR HERSTELLUNG VON GETRÄNKEN
METHOD FOR CLEANING THE STEAM NOZZLE OF A MACHINE FOR PREPARING BEVERAGES

(30) Priorité: 26.03.2008 FR 0851950
(43) Date de publication de la demande: 08.12.2010
(73) Titulaire: SEB S.A., 69130 Ecully (FR)
(72) Inventeur: MORIN, Gilles, F-14210 Sainte Honorine du Fay (FR); GAGNON, Laurent, F-14000 Caen (FR); CROSVILLE, Vincent, 75017 Paris (FR)
(74) Mandataire: Bourrières, Patrice
(86) Numéro de dépôt international: PCT/FR2009/000246
(87) Numéro de publication internationale: WO 2009/118486

(56) Documents cités:
- WO-A-03/091152
- WO-A-2006/067313

## Description

La présente invention se rapporte à un procédé de nettoyage d'une buse vapeur d'une machine pour la préparation de boissons. Une telle machine, comme par exemple une machine à café de type espresso, comporte une buse de sortie de vapeur ou d'autres liquides tels que du lait. Ces buses, dites buses vapeur, sont amenées à être plongées dans la boisson. Elles nécessitent par la suite un nettoyage, au moins de leur surface extérieure entrée en contact avec la boisson.

Le nettoyage d'une buse vapeur, par exemple après la préparation d'un cappuccino ou d'un latte, est fastidieux puisque traditionnellement il faut prévoir un chiffon humide ou un récipient d'eau et du produit nettoyant. Si bien qu'après la préparation d'une boisson, la buse vapeur est bien souvent laissée en l'état avec des traces, surtout s'il s'agit d'une machine de type domestique en libre service. Le nettoyage est d'autant plus difficile par la suite que des traces de lait ont séché sur la paroi extérieure de la buse. Il est alors quasiment indispensable de laisser tremper la buse dans un récipient contenant une solution nettoyante, typiquement de l'eau mélangée à un produit de nettoyage comme un détergent.

Toutes ces contraintes font que le nettoyage d'une buse vapeur est souvent négligé, même s'il est relativement aisé sur certaines machines de déplacer manuellement la buse vapeur pour plonger celle-ci dans un récipient placé à côté du plateau repose-tasses.

Par ailleurs, il est connu, notamment du document WO03091152A, des systèmes de nettoyage automatique d'une buse analogue à une buse vapeur. Ces systèmes placent la buse dans une chambre relativement fermée et délivrent par la buse une solution nettoyante sous pression. L'agitation vigoureuse du liquide autour de la buse nettoie celle-ci. Néanmoins de tels systèmes s'avèrent relativement complexes, encombrants et augmentent significativement le coût de la machine. En effet, l'enceinte définie par la chambre et la buse doit est relativement étanche compte tenu du liquide circulant sous pression. D'autre part le débit et la pression du liquide injecté nécessitent un dispositif d'alimentation en eau conséquent, et sensiblement plus coûteux que ceux prévus dans la plupart des machine espresso pour délivrer de l'eau chaude par la buse vapeur. Un inconvénient supplémentaire est la quantité de liquide relativement importante utilisée pour chaque nettoyage. Il faut alors prévoir soit un bac de récupération de grand volume, soit un raccordement sur une conduite d'évacuation d'eaux usées.

La présente invention a donc pour but de fournir une solution alternative aux procédés de nettoyage mis en oeuvre par de tels systèmes, en offrant un procédé de nettoyage d'une buse vapeur le plus automatisé possible, limitant les interventions de l'utilisateur, tout en pouvant être intégré à un coût raisonnable dans une machine pour la préparation de boissons, comme par exemple une machine espresso domestique.

A cet effet, la présente invention a pour objet un procédé de nettoyage d'une buse vapeur d'une machine pour la préparation de boissons, caractérisé par la fourniture d'une machine comprenant :
- une buse vapeur présentant une extrémité libre susceptible d'être plongée dans une boisson ;
- un récipient de rinçage présentant une ouverture supérieure et un dispositif de vidange apte à évacuer le liquide contenu vers un système de récupération,
- un dispositif d'alimentation apte à alimenter la buse en liquide de rinçage ;
- un dispositif de déplacement apte à déplacer verticalement la buse au moins lorsqu'elle est dans une zone de nettoyage de manière à ce que l'extrémité libre de ladite buse pénètre par l'ouverture supérieure du récipient de rinçage ; et
- une unité de commande électronique apte à commander au moins le dispositif de déplacement et le dispositif d'alimentation de la buse, et
caractérisé en ce qu'il comprend au moins une séquence de rinçage comportant les étapes de :
- abaissement de la buse en position de rinçage dans le récipient de rinçage ;
- remplissage du récipient en liquide de rinçage par la buse ; puis de
- vidange du récipient de rinçage par le dispositif de vidange qui est déclenchée par l'unité de commande reliée aux dispositifs de déplacement et d'alimentation de la buse.

Les étapes d'abaissement, de remplissage et de vidange sont réalisées de manière automatique par l'unité de commande électronique et les dispositifs d'alimentation et de déplacement de la buse vapeur. L'intervention de l'utilisateur au cours d'une séquence de rinçage n'est pas nécessaire, si ce n'est éventuellement pour le déplacement de la buse vapeur d'une zone de préparation de boissons vers la zone de nettoyage. De plus une telle unité de commande et un tel dispositif d'alimentation de la buse en vapeur et en eau, sont relativement courants pour les machines espresso et certaines comportent même un dispositif motorisé de montée et descente des sorties de boissons dans la zone de préparation. Le procédé de l'invention peut donc être mis en oeuvre avec peu d'éléments supplémentaires, sous réserve de leur attribuer de nouvelles fonctions et de fournir un récipient de rinçage adapté. De plus, le fait de prévoir un dispositif de vidange pour le récipient permet de répéter la séquence de rinçage sans intervention de l'utilisateur.

Selon une caractéristique supplémentaire particulièrement avantageuse le dispositif de vidange fourni est une conduite formant un siphon, ladite conduite présentant une entrée située à l'intérieur du récipient de rinçage et à proximité du fond de celui-ci, un coude situé à proximité de l'ouverture supérieure du récipient et à un niveau correspondant à un maximum de liquide contenu dans le récipient, et une sortie située sous le niveau de l'entrée, et :
- l'étape de remplissage du récipient est effectuée de manière à atteindre un niveau prédéterminé de liquide situé sous le niveau maximum, et
- l'étape de vidange est déclenchée en poursuivant le remplissage du récipient de rinçage au moins jusqu'au niveau maximum.

Un tel dispositif de vidange est particulièrement fiable et peu onéreux, d'une part parce qu'il ne comporte aucune pièce mobile, et d'autre part parce qu'il est déclenché simplement en complétant le niveau de liquide, ce qui ne crée pas de surcoût par rapport à la fonction de remplissage du récipient.

Dans des modes de réalisations préférés on a recours, en outre, à l'une ou l'autre des dispositions suivantes :
- la séquence de rinçage comprend entre les étapes de remplissage et de vidange, une étape d'agitation au cours de laquelle l'extrémité libre de la buse est déplacée alternativement de bas en haut dans le récipient de rinçage ou au cours de laquelle la buse délivre de la vapeur dans le récipient de rinçage ;
- la séquence de rinçage comprend, en outre, avant l'étape de vidange, une étape d'égouttage au cours de laquelle l'extrémité libre de la buse est relevée au-dessus du niveau maximum du récipient de rinçage et pendant laquelle une temporisation prédéterminée est décomptée avant de passer à l'étape de vidange ;
- on fournit en outre une sortie de produit de nettoyage apte à délivrer du produit de nettoyage dans le récipient de rinçage, et une séquence de nettoyage comprend :

- une étape préalable de délivrance d'une dose prédéterminée de produit de nettoyage, suivie par :
- les étapes de la séquence de rinçage définies précédemment au cours desquelles le mélange du produit de nettoyage et du liquide de rinçage forme une solution nettoyante ;
   - l'étape de délivrance de la séquence de nettoyage est immédiatement suivie par le déplacement de la sortie de produit de nettoyage de la zone de nettoyage vers une zone de rangement dans laquelle ladite sortie n'est pas susceptible de délivrer du produit de nettoyage dans le récipient ;
   - une séquence de préparation d'une boisson est suivie :
- d'une étape de déplacement de la buse vapeur d'une zone de préparation de boissons à la zone de nettoyage où elle est susceptible d'être abaissée dans le récipient de rinçage, et
- d'au moins une séquence de rinçage, et de préférence de deux séquences de rinçage ;
   - ladite au moins une séquence de rinçage suivant une séquence de préparation d'une boisson est précédée d'une séquence de nettoyage si une condition prédéterminée est remplie, et est suivie d'au moins deux séquences de rinçage et de préférence de trois séquences de rinçage ;
   - la condition prédéterminée est considérée comme remplie si un nombre prédéterminé de séquences de préparation d'une boisson a été effectué, ou si un temps prédéterminé a été atteint, depuis la précédente séquence de nettoyage ;
   - une séquence de calibrage du dispositif de déplacement est prévue et comporte les étapes de :
- abaissement de la buse jusqu'à ce que l'extrémité libre de celle-ci vienne en butée contre le fond du récipient de rinçage, et
- identification de la position de butée de la buse par analyse du courant utilisé par le dispositif de déplacement,
- mémorisation de la position correspondante du dispositif de déplacement par l'unité de commande électronique de manière à ce que celle-ci commande au cours des séquences de rinçage et de nettoyage des abaissements de la buse de valeurs inférieures pour ne pas venir en contact avec le fond du récipient.

D'autres caractéristiques et avantages apparaîtront au cours de la description qui va suivre, donnée à titre d'exemple non limitatif, en référence aux dessins dans lesquels :
- la figure 1 est une vue en perspective d'une machine à café comportant une buse vapeur et un plateau repose-tasses, ainsi qu'un système de nettoyage de la buse selon l'invention ;
- la figure 2 est une vue en perspective arrachée du plateau, de la buse et du système de nettoyage de la figure 1 ;
- la figure 3 est une vue arrachée partielle de dessus de la figure 1 ;
- la figure 4 est une vue analogue à la figure 3 dans laquelle le système de nettoyage est en configuration de nettoyage ;
- la figure 5 est une vue de face de la figure 4 pour laquelle la buse vapeur est abaissée ;
- la figure 6 est une vue en coupe simplifiée du plateau repose-tasses et d'un récipient de rinçage du système de nettoyage ; et
- la figure 7 est une vue en perspective du récipient de la figure 6.

Sur les différentes figures, des références identiques désignent des éléments identiques ou similaires.

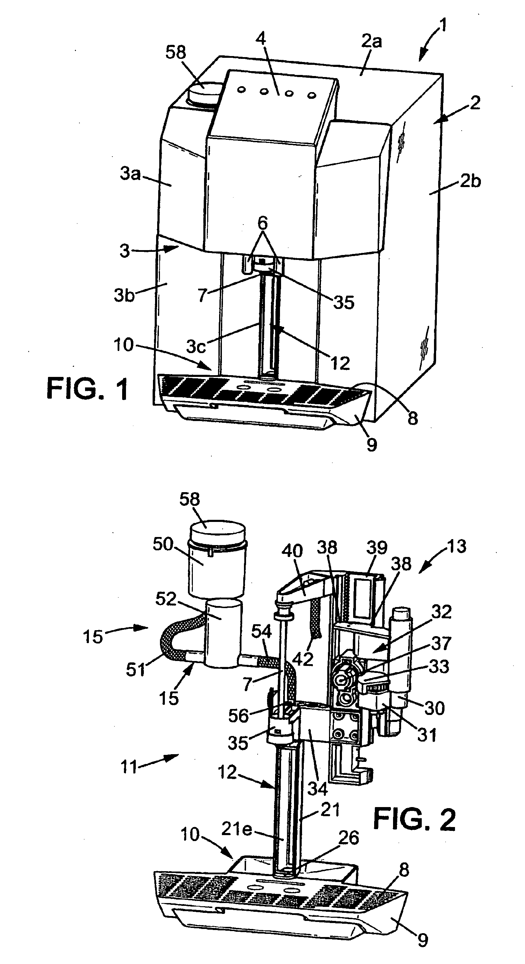

A la figure 1, est représentée une machine 1 pour la préparation de boissons, et plus particulièrement une machine à café espresso à usage domestique. Une telle machine peut être installée facilement par un simple branchement sur une prise électrique, mais sans raccordement à une conduite d'eau ou une conduite d'évacuation.

La machine 1 présente un boîtier 2 globalement parallélépipédique, avec notamment une face supérieure 2a, des faces latérales 2b et une façade 3. La façade 3 présente une partie supérieure 3a proéminente par rapport à une partie inférieure 3b. La partie supérieure 3a de la façade comporte un panneau de commande 4 muni de boutons reliés à une unité de commande électronique, non représentée, permettant de commander de manière la plus automatisée possible le fonctionnement de la machine.

Sous la partie proéminente 3a de la façade sont situées deux sorties de boisson 6, ici du café. Ces sorties 6 sont mobiles verticalement pour s'adapter à la hauteur de la tasse, mais cela n'est pas indispensable et une seule sortie pourrait être prévue.

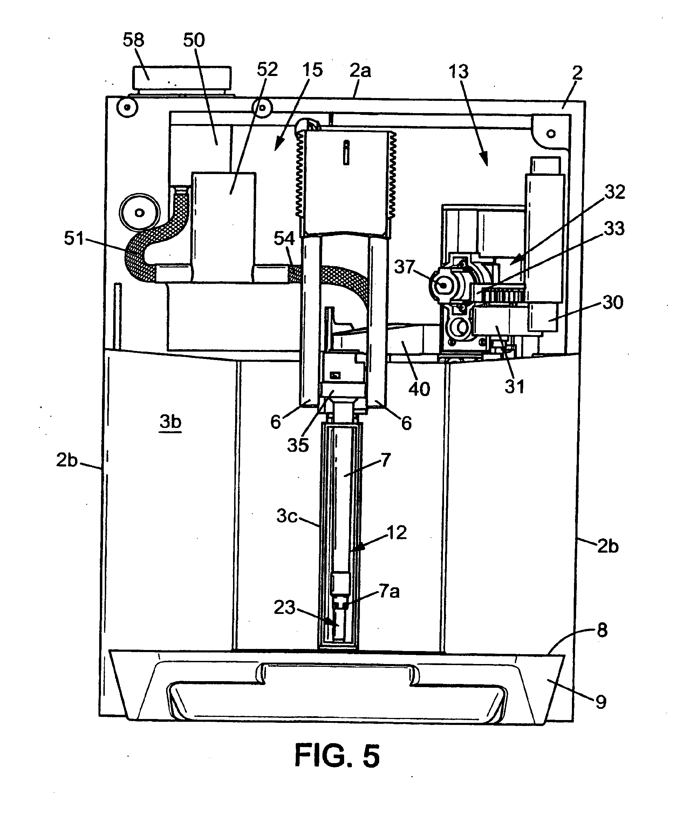

Sous la partie proéminente 3a de façade et en arrière des sorties 6, est également agencée une buse vapeur mobile 7, mieux visible aux figures 2 et 5.

De manière bien connue, le boîtier 2 comporte un groupe d'infusion permettant de délivrer, de préférence de manière automatique, du café par les sorties 6 à partir de réserves internes de mouture et d'eau.

De même, le boîtier 2 comporte un générateur de vapeur capable de délivrer de la vapeur à la buse 7, mais aussi de l'eau chaude sous faible pression. Ce dispositif d'alimentation en vapeur et en eau de la buse 7 peut être formé par tous moyens connus, et notamment une chaudière. L'alimentation en eau ou en vapeur est réalisée à l'aide d'électrovannes commandées par l'unité de commande électronique.

Dans la partie inférieure de la façade 3, est agencé un plateau repose-tasses 8 pour supporter une ou deux tasses destinées à recueillir la boisson délivrée par les sorties 6, et/ou préparée à l'aide de la buse vapeur 7. Il est néanmoins envisageable que ce plateau repose-tasses soit formé directement par le plan de travail sur lequel repose la machine.

Le plateau repose-tasses 8 est perforé et un bac de récupération 9 est disposé sous celui-ci pour récupérer les projections et débordements de liquide.

La machine 1 présente ainsi une zone de préparation de boissons 10 définie par l'espace s'étendant au-dessus du plateau repose-tasses 8 jusqu'aux sorties du café 6 et à la buse vapeur 7 en position haute, et plus généralement jusqu'au dessous de la partie supérieure proéminente 3a de la façade 3. Cette zone de préparation 10 est délimitée vers l'arrière par la partie inférieure 3b de la façade qui est faiblement incurvée. Toutefois, la zone de préparation pourrait se présenter sous forme d'une niche délimitée latéralement sur trois côtés par la façade.

La buse vapeur 7 est mobile verticalement dans la zone de préparation 10 grâce à un mécanisme qui sera détaillée ci-après. La mobilité verticale de la buse 7 est déterminée pour que l'extrémité libre 7a de celle-ci, mieux visible à la figure 5, puisse descendre dans une tasse placée sous les sorties 6. Il est alors possible de délivrer la vapeur par l'extrémité libre 7a de la buse pour réchauffer la boisson, et éventuellement émulsionner celle-ci en entraînant de l'air avec la vapeur. Il est envisageable de placer la buse dans une position supérieure pour délivrer un produit, par exemple de la mousse de lait sur un café, par exemple à l'aide d'un accessoire créant à l'aide de la vapeur une émission air/lait à l'extrémité de la buse.

Afin de nettoyer la buse vapeur 7 après qu'elle ait trempée dans une boisson comme un espresso, un latte macchiato, un cappuccino ou un chocolat chaud, la machine comprend un système de nettoyage 11 dont les principaux composants sont représentés à la figure 2. Il s'agit essentiellement d'un récipient de rinçage 12, d'un dispositif de déplacement 13 de la buse vapeur 7, et d'un dispositif de délivrance de produit de nettoyage 15.

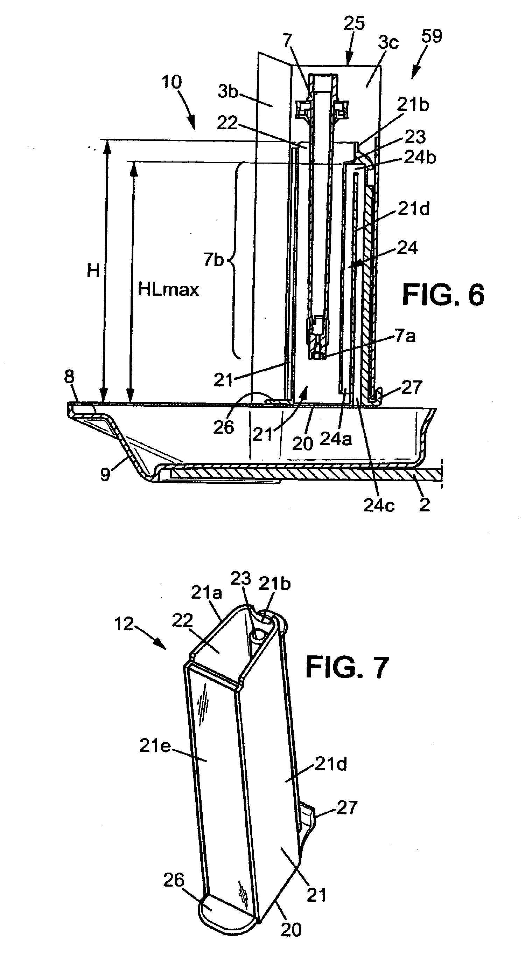

Comme cela est mieux visible aux figures 6 et 7, le récipient de rinçage 12 présente un fond 20 à partir duquel s'étend vers le haut la paroi annulaire 21 jusqu'à une ouverture supérieure 22 délimitée par le pourtour supérieur 21a de la paroi.

Le pourtour supérieur 21a de la paroi annulaire 21 présente une échancrure 21b qui constitue un trop-plein à partir duquel le liquide en excès s'écoule du côté de cette échancrure 21b.

Le récipient de rinçage 12 comporte également un dispositif de vidange 23 qui permet une évacuation quasi complète du liquide contenu dans le récipient. Le déclenchement de la vidange du récipient est effectué à la suite d'une commande, ou d'une série de commandes de l'unité de commande électronique.

La hauteur H, indiquée sur la figure 6, du récipient de rinçage 12 est relativement importante pour pouvoir recevoir la portion de la buse 7 qui a trempé dans une boisson. Du fait de la présence d'un trop-plein 21b et d'un dispositif de vidange 23, la hauteur H du récipient 12 est supérieure à celle de la plupart des tasses utilisées avec la machine.

La portion de la buse 7 susceptible d'être souillée est une portion 7b s'étendant de manière rectiligne à partir de l'extrémité libre 7a et présentant une section sensiblement constante, ici de forme circulaire. La paroi 21 du récipient 12 est avantageusement agencée pour entourer la portion rectiligne 7b de la buse de manière relativement étroite. Ceci permet de minimiser la quantité de liquide nécessaire pour le nettoyage ou le rinçage de la buse. Ici, le récipient 12 a une section transversale sensiblement trapézoïdale avec un sommet arrondi. Ce sommet correspond à la portion arrière 21d de la paroi annulaire 21. Les portions arrière 21d, frontale 21e et latérales de la paroi 21 du récipient 12, sont agencées pour être à proximité de la buse 7 en particulier à une distance inférieure à deux fois le diamètre extérieur maximum de la portion 7b de la buse 7, et comme représenté à une distance inférieure à une fois le diamètre extérieur de celle-ci.

Il est apparu particulièrement avantageux de réaliser le dispositif de vidange 23 à l'aide d'une conduite 24, mieux visible à la figure 6, qui forme un siphon. La conduite 24 présente une entrée 24a située à l'intérieur du récipient 12 et à proximité de son fond 20, une portion verticale rectiligne s'étendant jusqu'à un coude 24b, puis une autre portion verticale descendant jusqu'à un orifice de sortie 24c situé en dehors du récipient, et plus précisément sur la face inférieure du fond 20. On comprendra que la conduite 24 forme un siphon qui s'amorce lorsque le niveau du liquide dans le récipient atteint le niveau maximum HLmax défini par le sommet du coude 24b. Mais tant que le liquide reste à un niveau prédéterminé situé sous ce niveau maximum HLmax, le siphon ne s'amorce pas. En choisissant un niveau prédéterminé situé sous le niveau de la base du coude 24b, il n'y a aucune fuite de liquide par la sortie 24c de la conduite.

La conduite de vidange 24 est agencée sur la portion arrière 21d de la paroi du récipient 12. La portion frontale 21e de la paroi est plane et réalisée par une plaque transparente. Elle constitue ainsi une face frontale à travers laquelle on peut voir les déplacements de la buse 7 et constater la vidange du récipient 12.

Le récipient de rinçage 12 ainsi réalisé constitue donc un récipient spécifique, tant par sa forme globale qui est étroite et allongée verticalement, que par la présence d'un dispositif de vidange 23 et les autres particularités de réalisation.

Pour permettre le nettoyage de la buse 7 par introduction de celle-ci à travers l'ouverture supérieure 22, le récipient 12 est agencé dans une position bien précise par rapport au boîtier 2 de la machine.

Pour cela, la façade 3, et plus particulièrement la partie inférieure 3b de celle-ci comporte un logement en creux 3c, voir figures 1 et 5. Le logement creux 3c s'étend verticalement sur toute la hauteur de la partie inférieure 3b de la façade de sorte qu'il forme une ouverture frontale dans cette façade.

Le logement 3c présente une section transversale trapézoïdale dont la base plus large est située du côté de la façade 3. La section transversale du logement 3c est adaptée pour recevoir de manière ajustée le récipient de rinçage 12, et de sorte que celui-ci soit intégralement contenu dans ce logement. La face frontale transparente 21e vient ainsi affleurer avec le prolongement de la façade 3. Il n'y a pas d'inférence entre le récipient de rinçage 12 et les tasses qui peuvent être placées dans la zone de préparation de boissons 10. D'autre part, l'ouverture frontale du logement 3c est suffisamment étroite pour interdire toute introduction d'une tasse.

Comme cela apparaît à la figure 6, l'extrémité inférieure du logement 3c est largement ouverte de sorte qu'il communique avec le bac de récupération 9 qui s'étend sous ce logement creux 3c et même au-delà. Cette absence de fond au logement 3c permet de récupérer dans le bac 9 un éventuel débordement du récipient 12. La partie supérieure du logement 3c est également ouverte, de sorte que la zone de nettoyage 25 définie par ce logement s'étend au-dessus du récipient de rinçage 12.

Le récipient 12 présente à la base de sa face frontale 21e une languette 26 qui vient en appui sur le plateau repose-tasses 8 situé à la base du logement 3c. Cette languette 26 et la portion arrière 21c de la paroi du récipient venant en appui contre le fond du logement, permettent de retenir le récipient 12.

Le récipient 12 est avantageusement monté de manière amovible dans le logement 3c, par exemple pour nettoyer les quelques dépôts qui peuvent s'accumuler dans celui-ci. A cet effet, la base de la paroi arrière 21d présente un crochet 27 qui, en position montée, passe par une échancrure inférieure du logement 3c et vient derrière le fond du logement 3c. La languette 26 constitue alors un organe de préhension qui permet de dégager le récipient 12 du logement 3c. Pour cela, on soulève légèrement l'organe de préhension 26 en faisant basculer la paroi arrière 21d du récipient de sorte que le crochet 27 soit dégagé de la paroi du logement 3c, la buse vapeur 7 étant bien entendu relevée.

Le dispositif de déplacement 13 visible dans son ensemble à la figure 2 est porté par un axe vertical 30. Cet axe 30 est immobilisé par rapport au boîtier 2 à l'aide d'une console non représentée sur les figures. Un moteur d'entraînement en pivotement 31 présentant une roue dentée, est également monté de manière fixe par rapport au boîtier 2 à l'aide de cette console.

Un ensemble pivotant 32 est monté en rotation autour de l'axe 30 et comporte un secteur denté 33 qui engrène avec la roue dentée du moteur d'entraînement en pivotement 31. L'ensemble pivotant 32 présente également un bras inférieur 34 à l'extrémité duquel est agencé un organe de guidage 35 qui guide le coulissement vertical de la buse 7 par rapport à ce bras 34 qui ne se déplace pas verticalement. La distance entre l'axe 30 et l'organe de guidage 35, de l'ordre d'une dizaine de centimètres, constitue un bras de levier qui permet de déplacer horizontalement la buse 7 sur quelques centimètres avec un mouvement d'amplitude angulaire relativement limité. L'ensemble pivotant 32 forme donc un organe de déplacement horizontal de la buse.

L'ensemble 32 porte de plus un moteur d'entraînement vertical 37 présentant une roue dentée située au niveau de guides verticaux 38. Les guides verticaux 38 portent un chariot 39 qui présente une crémaillère et à partir duquel s'étend horizontalement un bras supérieur 40.

L'extrémité supérieure de la buse 7 est fixée au bras supérieur 40. L'eau ou la vapeur sont amenées dans la buse 7 par cette extrémité supérieure grâce à un conduit interne au bras 40 auquel est connectée une conduite flexible 42 reliée au dispositif d'alimentation en vapeur et eau chaude.

L'actionnement du moteur d'entraînement vertical 37 permet de déplacer l'extrémité du bras 40 d'une position haute, telle que représentée à la figure 2, vers une position basse, telle que celle représentée à la figure 5, et une position plus abaissée encore pour laquelle l'extrémité libre 7a de la buse vient en contact contre le fond 20 du récipient 12 pour des raisons explicitées ci-après.

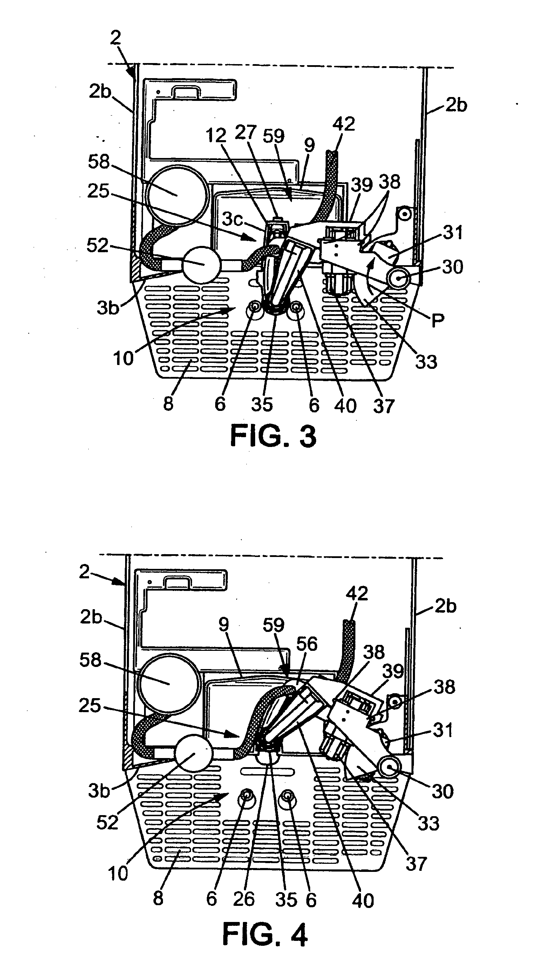

Le dispositif de déplacement 13 permet donc de déplacer verticalement la buse vapeur 7 dans la zone de préparation de boissons 10 pour que celle-ci plonge dans une tasse. Mais grâce au moteur d'entraînement en pivotement 31 et comme cela est mieux visible aux figures 3 et 4, la buse 7 peut être déplacée dans le plan horizontal de la zone de préparation de boissons 10 à la zone de nettoyage 25 définie par le logement 3c. Une fois dans la zone de nettoyage 25, la buse est située en regard de l'ouverture 22 du récipient 12, et un déplacement vertical de celle-ci, tout à fait analogue à celui effectué dans la zone de nettoyage, peut être commandé par l'unité de commande électronique. Néanmoins, il est possible de prévoir pour des raisons de coût que certains de ces déplacements, et notamment le déplacement horizontal, soient effectués manuellement.

Le dispositif de délivrance de produit de nettoyage 15 comprend un réservoir 50, une première conduite flexible 51 conduisant jusqu'à un dispositif de dosage 52, suivi d'une deuxième conduite flexible 54 emmanchée sur la première extrémité d'un tube 56, la deuxième extrémité de ce tube 56 formant la sortie de produit de nettoyage. Le réservoir 50 est agencé en hauteur par rapport au reste du dispositif de distribution de liquide de nettoyage, de sorte qu'il alimente celui-ci par gravité. Le réservoir 50 est monté par l'intermédiaire d'une collerette sur la paroi supérieure 2a du boîtier. Un bouchon 58 permet de remplir le réservoir 50 sans avoir à le sortir du boîtier 2. Mais, bien entendu, il est parfaitement possible de prévoir un réservoir interne amovible ou encore des réserves de produit de nettoyage se présentant sous forme de cartouches échangeables.

Le produit de nettoyage est de préférence un produit détergent concentré, adapté notamment pour dissoudre des traces de lait. Il peut contenir aussi des agents antimicrobiens.

Le dispositif de dosage 52 alimenté par gravité est une simple électrovanne commandée par l'unité de commande électronique. Il pourrait s'agir aussi d'une pompe doseuse particulièrement simple dont le volume unitaire correspond à une dose de produit, car comme cela apparaîtra par la suite, le système de nettoyage nécessite simplement la délivrance d'une dose déterminée et ce à une pression correspondant à la pression atmosphérique. Contrairement à d'autres dispositifs, il n'est donc pas nécessaire de délivrer sous pression un débit relativement régulier qui doit être mélangé avec un écoulement de fluide sous pression.

Le tube 56 traverse le bras inférieur 34 pour déboucher verticalement vers le bas. On notera que la sortie de produit de nettoyage 56 est donc rigidement liée au bras inférieur 34, et plus généralement à l'ensemble pivotant 32 qui permet de déplacer horizontalement la buse 7. Le tube 56 est judicieusement agencé pour que son débouché inférieur soit situé au-dessus de l'ouverture supérieure 22 du récipient de rinçage 12 lorsque la buse 7 est dans la zone de préparation 10, comme on peut le voir à la figure 3. Lorsque le dispositif de déplacement 13 place la buse 7 dans la zone de nettoyage 25, c'est-à-dire lorsqu'il atteint la configuration représentée à la figure 4, la sortie de liquide de nettoyage constituée par le tube 56, est déplacée vers l'arrière dans une position de rangement. Dans cette position, la sortie de liquide est dans une zone de rangement 59 et est située à l'intérieur de la machine, derrière la façade 3 et en dehors des zones de préparation et de nettoyage (10, 25), il n'y a donc aucun risque qu'un reliquat de produit de nettoyage tombe dans une tasse ou dans le récipient de rinçage 12.

Comme on peut le voir à la figure 4, la sortie de produit de nettoyage 56 placée dans cette zone de rangement 59 demeure au-dessus du bac de récupération 9 étant donné que celui-ci se prolonge vers l'arrière au-delà du logement 3c de la façade 3. D'éventuelles gouttes de produit de nettoyage sont alors récupérées par le bac 9.

Dans le mode de réalisation représenté, le bac de récupération 9 est formé en une seule pièce et présente un seul compartiment pour recueillir les éventuelles chutes de liquide passant à travers le plateau repose-tasses 8, l'ouverture inférieure du logement 3c, ou venant de la sortie de produit de nettoyage 56 en position de rangement. Mais il est envisageable de prévoir plusieurs bacs de récupération pour remplir ces différentes fonctions, ou encore de prévoir deux ou trois compartiments reliés par des trop-pleins pour les différentes zones. Toutefois, la réalisation en une seule pièce du bac 9 et son montage dans la machine par coulissement horizontal, comme cela apparaît à la figure 6, rend son utilisation plus pratique.

On va maintenant décrire différentes séquences de fonctionnement de la machine 1 décrite ci-dessus.

Pour la préparation d'une boisson, commandée automatiquement par l'une des touches du panneau de commande 4, la buse vapeur 7 est initialement placée dans la zone de préparation 10 en position relevée, c'est-à-dire telle que représentée à la figure 1. Si la séquence de préparation commandée comporte une étape d'introduction de vapeur dans la boisson, ou s'il s'agit d'une séquence faisant intervenir uniquement la buse vapeur 7 par exemple pour réchauffer une boisson, le dispositif de déplacement 13 commandé par l'unité de commande électronique entraîne un abaissement de l'extrémité libre 7a de la buse jusqu'à ce qu'elle soit plongée dans la boisson, mais de préférence sans toucher le fond de la tasse.

A la fin d'une telle séquence de préparation dans laquelle la buse 7 est entrée en contact avec la boisson, l'unité de commande est adaptée pour réaliser, soit une simple séquence de rinçage de la buse, soit une séquence de nettoyage de celle-ci. Mais on notera que les principaux avantages du système de nettoyage décrit sont obtenus même si la séquence de nettoyage et/ou de rinçage n'est pas initiée automatiquement après la préparation d'une boisson, mais initiée en appuyant sur des touches rinçage ou nettoyage, et même si la buse vapeur 7 doit être repoussée manuellement dans la zone de nettoyage 25 avant ou au cours de ces séquences.

Pour une séquence de rinçage automatisée après la préparation d'une boisson, l'unité de commande provoque le déplacement de la buse en position haute de la zone de préparation 10 à la zone de nettoyage 25 grâce au moteur d'entraînement en pivotement 31 qui entraîne l'ensemble de l'organe de déplacement horizontal 32 en pivotement selon la flèche P de la figure 3. L'extrémité libre 7a de la buse vapeur est située au-dessus du récipient de rinçage, et son abaissement dans celui-ci est effectué à l'aide du moteur d'entraînement vertical 37 qui abaisse l'organe de déplacement vertical 39 et le bras supérieur 40 auquel est fixée la buse 7.

Le remplissage du récipient de rinçage 12 est alors effectué par la buse 7 en commandant la délivrance d'eau chaude par celle-ci. L'unité de gestion est adaptée pour que la quantité d'eau chaude délivrée, qui constitue le liquide de rinçage, ne dépasse pas un niveau prédéterminé de liquide qui doit être situé sous le niveau maximum HLmax. Il est à noter que le remplissage du réservoir pourrait intervenir avec la buse vapeur en position haute, mais au risque de voir des projections d'eau chaude aller en dehors du récipient de rinçage 12.

La buse 7 est alors immergée dans le liquide de rinçage, ce qui améliore déjà la propreté de celle-ci étant donné que la boisson présente sur sa surface extérieure vient d'être préparée, et qu'une simple dilution de cette boisson par l'eau chaude permet d'en éliminer la plus grande quantité. Il est toutefois avantageux de procéder à une agitation du liquide autour de la buse.

L'agitation peut consister à entraîner un déplacement de bas en haut de celle-ci, de sorte que son extrémité libre 7a se déplace entre cette position abaissée, ou une position plus basse mais en évitant de préférence de toucher le fond 20 du récipient 12, et une position plus élevée mais sans nécessairement atteindre la position haute extrême dans laquelle la buse a été amenée dans la zone de nettoyage 25. La commande de trois mouvements de va-et-vient verticaux de la buse dans le récipient s'avère suffisant pour optimiser le rinçage de la buse.

L'agitation peut également être créée en délivrant de la vapeur par l'extrémité libre 7a de la buse immergée dans le liquide de rinçage. Le liquide de rinçage subit alors des remous relativement violents qui, avec la vapeur, nettoient la surface extérieure de la buse 7. Ces deux possibilités d'agitation peuvent être combinées successivement ou simultanément.

L'extrémité libre 7a de la buse est ensuite remontée au-dessus du niveau prédéterminé de liquide, et de préférence au-dessus du niveau maximum de liquide HLmax pour que le liquide de rinçage présent à la surface et surtout dans la buse s'égoutte. L'émission d'une brève impulsion de vapeur peut être commandée pour s'assurer de la vidange de la buse.

Après le décompte d'une temporisation prédéterminée correspondant à l'égouttage de la buse, la vidange du récipient de rinçage 12 est commandée de manière particulièrement simple avec le dispositif de vidange 23 précédemment décrit. En effet, il suffit de cette position d'égouttage de compléter le niveau de liquide du récipient 12 jusqu'au niveau maximum HLmax avec un débit suffisant pour remplir le coude 24b du conduit 24 et amorcer le siphon. Une fois le siphon amorcé, le liquide de rinçage souillé est évacué jusqu'au niveau de l'entrée 24a, c'est-à-dire que le réservoir est plus ou moins complètement vidé selon la position de l'entrée. Bien entendu, la vidange du récipient 12 pourrait être déclenchée avec l'extrémité libre 7a de la buse immergée dans le liquide, surtout si l'étape d'égouttage n'est pas prévue.

Il est à noter que d'autres dispositifs de vidange peuvent être adoptés avec le dispositif de déplacement 13 et le réservoir 12 agencés comme décrit ci-dessus. En effet, il est par exemple possible de prévoir une soupape sur le fond 20 du réservoir 12 et de commander l'ouverture de celle-ci en abaissant l'extrémité libre 7a de la buse pour venir en contact avec cette soupape.

Si la buse 7 n'est pas en position haute après la vidange du réservoir, la remontée de celle-ci est commandée afin qu'elle puisse être repositionnée dans la zone de préparation 10 par pivotement et sans heurter le réservoir 12. Néanmoins, avant de repositionner la buse 7, la séquence de rinçage peut être répétée une ou deux fois pour améliorer le rinçage. Deux séquences de rinçage successives réalisées immédiatement après une séquence de préparation de boissons permettent d'obtenir un résultat satisfaisant tout en limitant la quantité d'eau utilisée, et par conséquent en optimisant l'autonomie de la machine, tant au niveau de son réservoir d'eau qu'au niveau du remplissage du bac de récupération 9.

Si cela s'avère nécessaire, la séquence de rinçage peut être remplacée par une véritable séquence de nettoyage, suivie d'une ou plusieurs séquences de rinçage, et de préférence de trois séquences de rinçage pour s'assurer qu'aucune trace de produit nettoyant ne demeure sur la buse.

La séquence de nettoyage débute par la délivrance de produit de nettoyage, avant même que la buse 7 soit déplacée de la zone de préparation 10 à la zone de nettoyage 25. En effet, pour délivrer un produit de nettoyage dans le récipient de rinçage 12, il faut que la sortie de produit 56 soit située au-dessus de l'ouverture 22 du récipient, et par conséquent que le bras inférieur 34 soit dans une position angulaire correspondant à la figure 3. Le dosage du produit de nettoyage est effectué en laissant ouvert pour un temps donné l'électrovanne 52, ce qui permet un dosage relativement précis étant donné le faible débit obtenu par l'écoulement par gravité depuis le réservoir 50.

Une fois la dose de produit de nettoyage délivrée, et éventuellement après une temporisation, l'ensemble pivotant 32 est déplacé par le moteur d'entraînement en pivotement 31 pour placer la buse au-dessus du récipient de rinçage 12 comme représenté à la figure 4, c'est-à-dire comme pour initier une séquence de rinçage et avant le rinçage proprement dit. Il est à noter que dans cette configuration la sortie de produit 56 est en position de rangement au-dessus du bac de récupération 9. Par conséquent, si un reliquat de produit de nettoyage s'égoutte, ceci n'a aucune conséquence.

A partir de cette position, la séquence de nettoyage se poursuit selon exactement les mêmes étapes que celles de la séquence de rinçage, mis à part que le liquide de rinçage constitué par l'eau chaude est cette fois-ci mélangé au produit de nettoyage pour constituer une solution nettoyante qui agit sur les salissures de la buse.

A la fin de la séquence de nettoyage, c'est-à-dire après évacuation de la solution nettoyante, on procède systématiquement à au moins une séquence de rinçage afin que des traces de produit de nettoyage ne viennent pas altérer le goût ou l'aspect d'une boisson préparée par la suite. Pour avoir un haut degré de fiabilité sur l'absence de telles traces, on procède à trois séquences de rinçage après une séquence de nettoyage.

Cette séquence de nettoyage peut bien entendu être commandée à l'initiative de l'utilisateur, mais pour une utilisation plus automatisée et donc la plus simple possible pour l'utilisateur, tout en optimisant la consommation d'eau et l'autonomie de la machine en produit de nettoyage, la séquence de nettoyage n'est déclenchée que dans certaines conditions. Ces conditions peuvent comprendre un nombre de cycles de préparation de boissons effectuées depuis la dernière séquence de nettoyage. Par exemple, l'unité de commande électronique peut comptabiliser les cycles de préparation pour prévoir une séquence de nettoyage après dix cycles de préparation de boissons faisant intervenir la buse vapeur 7. Le déclenchement de la séquence de nettoyage peut aussi être commandé en comptabilisant un temps écoulé depuis la dernière séquence de nettoyage, par exemple en la déclenchant automatiquement si 24 heures ou 7 jours se sont écoulés depuis la dernière séquence de nettoyage. Ces deux types de condition peuvent être avantageusement combinés pour obtenir le meilleur compromis possible entre la propreté de la buse et les consommations d'eau et de produit de nettoyage, son déclenchement étant commandé dès que l'une des deux conditions est atteinte.

Il apparaît que la plage de déplacement vertical de l'extrémité libre 7a de la buse doit être contrôlée de manière assez précise, notamment pour réaliser une étape d'agitation de la buse qui soit d'amplitude relativement importante mais sans heurter le fond 20 du récipient 12.

Pour cela, une séquence de calibrage du dispositif de déplacement 13 dans la direction verticale est effectuée de la manière suivante : la buse vapeur 7 est abaissée dans la zone de nettoyage 25 jusqu'à ce que l'extrémité libre 7a de celle-ci vienne en butée contre le fond 20 du récipient de rinçage 12. Cette position de butée est identifiée et mémorisée par l'unité de commande électronique grâce à une analyse du courant utilisé par le moteur d'entraînement vertical 37. De manière connue en soi, un pic de l'intensité consommée par ce moteur indique que l'on a atteint la position de butée. En mémorisant la position d'abaissement maximal, sous forme d'une durée d'alimentation du moteur depuis la position haute, ou sous forme d'un nombre de tours effectués, il est possible d'éviter de toucher à nouveau le fond du récipient, mais surtout d'éviter de toucher le fond d'une tasse. Ce dernier point est plus important étant donné que certaines tasses peuvent s'avérer relativement fragiles et que la délivrance de vapeur dans une tasse avec la buse 7 en butée contre le fond peut créer des éclaboussures. Tandis que le récipient de rinçage 12, prévu pour cette machine et un usage bien spécifique, peut tout à fait être dimensionné afin que le fond de celui-ci 20 résiste parfaitement à une telle séquence de calibration.

Bien entendu, l'exemple de réalisation décrit ci-dessus n'est nullement limitatif. On aura compris que tous les aspects décrits ne sont pas nécessairement repris pour réaliser un nettoyage simplifié d'une buse vapeur, il est notamment possible de prévoir que le déplacement horizontal de la zone de préparation 10 à la zone de nettoyage 24, est non seulement commandé manuellement, mais effectué manuellement en repoussant la buse pour économiser un actionneur électrique. D'autre part, il apparaîtra aussi clairement que la buse 7 n'est pas impérativement une buse vapeur au sens où on l'entend pour une machine à café espresso, mais qu'il peut s'agir d'une buse délivrant en plus du lait, voire une boisson toute prête.

## Revendications

1. Procédé de nettoyage d'une buse vapeur d'une machine pour la préparation de boissons, **caractérisé par** la fourniture d'une machine comprenant :
- une buse vapeur (7) présentant une extrémité libre (7a) susceptible d'être plongée dans une boisson ;
- un récipient de rinçage (12) présentant une ouverture supérieure (22) et un dispositif de vidange (23) apte à évacuer le liquide contenu vers un système de récupération (9),
- un dispositif d'alimentation apte à alimenter la buse en liquide de rinçage ;
- un dispositif de déplacement (13) apte à déplacer verticalement la buse (7) au moins lorsqu'elle est dans une zone de nettoyage (25) de manière à ce que l'extrémité libre de ladite buse pénètre par l'ouverture supérieure du récipient de rinçage (12) ; et
- une unité de commande électronique apte à commander au moins le dispositif de déplacement et le dispositif d'alimentation de la buse, et
**caractérisé en ce qu'**il comprend au moins une séquence de rinçage comportant les étapes de :
- abaissement de la buse (7) en position de rinçage dans le récipient de rinçage (12) ;
- remplissage du récipient (12) en liquide de rinçage par la buse (7) ; puis de
- vidange du récipient de rinçage par le dispositif de vidange (23) qui est déclenchée par l'unité de commande reliée aux dispositifs de déplacement et d'alimentation de la buse (7).

2. Procédé selon la revendication 1, dans lequel le dispositif de vidange fourni (23) est une conduite (24) formant un siphon, ladite conduite présentant une entrée (24a) située à l'intérieur du récipient de rinçage (12) et à proximité du fond (20) de celui-ci, un coude (24b) situé à proximité de l'ouverture supérieure du récipient et à un niveau (HLmax) correspondant à un maximum de liquide contenu dans le récipient, et une sortie (24c) située sous le niveau de l'entrée, et dans lequel :
- l'étape de remplissage du récipient est effectuée de manière à atteindre un niveau prédéterminé de liquide situé sous le niveau maximum (HLmax), et
- l'étape de vidange est déclenchée en poursuivant le remplissage du récipient de rinçage (12) au moins jusqu'au niveau maximum (HLmax).

3. Procédé selon la revendication 1 ou 2, dans lequel la séquence de rinçage comprend entre les étapes de remplissage et de vidange, une étape d'agitation au cours de laquelle l'extrémité libre (7a) de la buse est déplacée alternativement de bas en haut dans le récipient de rinçage (12), ou au cours de laquelle la buse (7) délivre de la vapeur dans le récipient de rinçage.

4. Procédé selon l'une quelconque des revendications précédentes, dans lequel la séquence de rinçage comprend, en outre, avant l'étape de vidange, une étape d'égouttage au cours de laquelle l'extrémité libre (7a) de la buse est relevée au-dessus du niveau maximum (HLmax) du récipient de rinçage et pendant laquelle une temporisation prédéterminée est décomptée avant de passer à l'étape de vidange.

5. Procédé de nettoyage d'une buse, selon l'une quelconque des revendications précédentes dans lequel on fournit en outre une sortie de produit de nettoyage (56) apte à délivrer du produit de nettoyage dans le récipient de rinçage (12), et dans lequel une séquence de nettoyage comprend :
- une étape préalable de délivrance d'une dose prédéterminée de produit de nettoyage ; suivie par :
- les étapes de la séquence de rinçage définies par l'une quelconque des revendications précédentes au cours desquelles le mélange du produit de nettoyage et du liquide de rinçage forme une solution nettoyante.

6. Procédé de nettoyage selon la revendication 5, dans lequel l'étape de délivrance de la séquence de nettoyage est immédiatement suivie par le déplacement de la sortie de produit de nettoyage (56) de la zone de nettoyage (25) vers une zone de rangement (59) dans laquelle ladite sortie n'est pas susceptible de délivrer du produit de nettoyage dans le récipient (12).

7. Procédé de nettoyage selon l'une quelconque des revendications précédentes, dans lequel une séquence de préparation d'une boisson est suivie :
- d'une étape de déplacement de la buse vapeur d'une zone de préparation de boissons (10) à la zone de nettoyage (25) où elle est susceptible d'être abaissée dans le récipient de rinçage (12), et
- d'au moins une séquence de rinçage, et de préférence de deux séquences de rinçage.

8. Procédé de nettoyage selon la revendication 7, dans lequel ladite au moins une séquence de rinçage suivant une séquence de préparation d'une boisson est précédée d'une séquence de nettoyage telle que définie aux revendications 5 ou 6, si une condition prédéterminée est remplie, et est suivie d'au moins deux séquences de rinçage et de préférence de trois séquences de rinçage.

9. Procédé de nettoyage selon la revendication 8, dans lequel la condition prédéterminée est considérée comme remplie si un nombre prédéterminé de séquences de préparation d'une boisson a été effectué, ou si un temps prédéterminé a été atteint, depuis la précédente séquence de nettoyage.

10. Procédé de nettoyage selon l'une quelconque des revendications précédentes, dans lequel est prévue en outre une séquence de calibrage du dispositif de déplacement qui comporte les étapes de :
- abaissement de la buse (7) jusqu'à ce que l'extrémité libre (7a) de celle-ci vienne en butée contre le fond (20) du récipient de rinçage (12), et
- identification de la position de butée de la buse par analyse du courant utilisé par le dispositif de déplacement (13) ;
- mémorisation de la position correspondante du dispositif de déplacement par l'unité de commande électronique de manière à ce que celle-ci commande au cours des séquences de rinçage et de nettoyage des abaissements de la buse de valeurs inférieures pour ne pas venir en contact avec le fond du récipient (12).

## Patentansprüche

1. Verfahren zur Reinigung einer Dampfdüse an einer Maschine für die Getränkezubereitung, **dadurch gekennzeichnet, dass** eine Maschine bereitgestellt wird, die Folgendes aufweist:
- eine Dampfdüse (7) mit einem freien Ende (7a) zum Eintauchen in ein Getränk;
- einen Spülbehälter (12) mit einer oberen Öffnung (22) und einer Entleerungsvorrichtung (23) zur Ableitung der enthaltenen Flüssigkeit in ein Rückgewinnungssystem (9);
- eine Zuführvorrichtung, die dazu geeignet ist, die Düse mit Spülflüssigkeit zu versorgen;
- eine Verlagerungsvorrichtung (13), durch die sich die Düse (7) vertikal bewegen lässt, zumindest wenn sie sich in einer Reinigungszone (25) befindet, so dass das freie Ende der genannten Düse durch die obere Öffnung des Spülbehälters (12) ragt; und
- eine elektronische Steuereinheit, die dazu geeignet ist, mindestens die Verlagerungsvorrichtung und die Zuführvorrichtung der Düse zu steuern, und **dadurch gekennzeichnet, dass** es mindestens eine Spülsequenz mit folgenden Stufen umfasst:
- Absenken der Düse (7) in die Spülposition im Spülbehälter (12);
- Füllen des Behälters (12) mit Spülflüssigkeit über die Düse (7); anschließend
- Entleeren des Spülbehälters über die Entleerungsvorrichtung (23), die durch die Steuereinheit aktiviert wird, welche mit der Verlagerungs- und der Zuführvorrichtung der Düse (7) verbunden ist.

2. Verfahren nach Anspruch 1, wobei die bereitgestellte Entleerungsvorrichtung (23) als Rohr (24) ausgebildet ist, das einen Siphon bildet, wobei das genannte Rohr einen Einlass (24a) im Inneren des Spülbehälters (12) und nahe an dessen Boden (20), einen Bogen (24b) nahe der oberen Öffnung des Behälters und auf einer Höhe (HLmax), die dem maximalen Füllstand der im Behälter enthaltenen Flüssigkeit entspricht, und einen Auslass (24c) unterhalb des Einlasses aufweist, und wobei:
- die Stufe der Befüllung des Behälters derart erfolgt, dass ein vorab festgelegter Flüssigkeitsstand erreicht wird, der unterhalb der maximalen Höhe (HLmax) liegt, und
- die Stufe der Entleerung aktiviert wird, sobald der Spülbehälter (12) mindestens bis zur maximalen Höhe (HLmax) befüllt wird.

3. Verfahren nach Anspruch 1 oder 2, wobei die Spülsequenz zwischen den Stufen der Befüllung und Entleerung eine Rührstufe umfasst, bei der das freie Ende (7a) der Düse im Spülbehälter (12) abwechselnd nach oben und unten bewegt wird, oder bei der die Düse (7) Dampf in den Spülbehälter bläst.

4. Verfahren nach einem der vorstehenden Ansprüche, wobei die Spülsequenz vor dem Entleerungsschritt einen weiteren Abtropfschritt umfasst, bei dem das freie Ende der Düse (7a) auf eine Höhe oberhalb der maximalen Höhe (HLmax) des Spülbehälters gebracht wird und eine voreingestellte Zeit verstreicht, bis zum Entleerungsschritt übergegangen wird.

5. Verfahren zur Reinigung einer Düse nach einem der vorstehenden Ansprüche, wobei darüber hinaus ein Auslass für das Reinigungsprodukt (56) zur Verfügung steht, der geeignet ist, das Reinigungsprodukt in den Spülbehälter (12) zu leiten, und das folgende Reinigungssequenz umfasst:
- einen vorgelagerten Schritt zur Zuführung einer vorab festgelegten Menge des Reinigungsprodukts, gefolgt von:
- den Schritten der Spülsequenz gemäß einem der vorstehenden Ansprüche, wobei die Mischung des Reinigungsprodukts und der Spülflüssigkeit eine Reinigungslösung ergibt.

6. Reinigungsverfahren nach Anspruch 5, wobei auf den Reinigungssequenzschritt unmittelbar die Verlagerung des Auslasses für das Reinigungsprodukt (56) von der Reinigungszone (25) in eine Parkzone (59) folgt, in der es nicht möglich ist, dass durch den genannten Auslass Reinigungsmittel in den Behälter (12) gelangt.

7. Reinigungsverfahren nach einem der vorstehenden Ansprüche, wobei eine Sequenz der Zubereitung eines Getränks gefolgt wird von:
- einem Schritt der Verlagerung der Dampfdüse aus der Getränkezubereitungszone (10) in die Reinigungszone (25), wo sie in den Spülbehälter (12) abgesenkt werden kann, und
- mindestens einer Spülsequenz, vorzugsweise zwei Spülsequenzen.

8. Reinigungsverfahren nach Anspruch 7, wobei der genannten mindestens einmal erfolgenden Spülsequenz nach einer Getränkezubereitung eine Reinigungssequenz gemäß den Ansprüchen 5 oder 6 vorangeht, wenn eine vorab festgelegte Bedingung erfüllt ist, und mindestens zwei, vorzugsweise drei Spülsequenzen folgen.

9. Reinigungsverfahren nach Anspruch 8, wobei die vorab festgelegte Bedingung als erfüllt betrachtet wird, wenn eine vorab festgelegte Anzahl von Getränkezubereitungssequenzen durchlaufen wurde oder seit der letzten Reinigungssequenz eine vorab festgelegte Zeit verstrichen ist.

10. Reinigungsverfahren nach einem der vorstehenden Ansprüche, wobei darüber hinaus eine Kalibriersequenz der Verlagerungsvorrichtung vorgesehen ist, der folgende Schritte umfasst:
- Absenken der Düse (7) bis zum Anschlag des freien Endes (7a) der Düse am Boden (20) des Spülbehälters (12), und
- Erkennen der Anschlagposition der Düse mittels Analyse des von der Verlagerungsvorrichtung verbrauchten Stroms (13);
- Speichern der entsprechenden Position der Verlagerungsvorrichtung durch die elektronische Steuereinheit, so dass letztere während der Spül- und Reinigungssequenzen die Absenkung der Düse mittels geringerer Werte so steuert, dass diese nicht mit dem Boden des Behälters (12) in Berührung kommt.

## Claims

1. Method for cleaning a steam nozzle of a beverage preparation machine, **characterised by** the provision of a machine comprising:
- a steam nozzle (7) having a free end (7a) which can be immersed in a beverage;
- a rinsing container (12) having an upper opening (22) and an emptying device (23) adapted to evacuate the liquid contained to a recovery system (9),
- a supply device adapted to supply rinsing liquid to the nozzle;
- a displacement device (13) adapted to displace the nozzle (7) vertically at least when it is in a cleaning area (25) so that the free end of said nozzle penetrates through the upper opening of the rinsing container (12); and
- an electronic control unit capable of controlling at least the displacement and supply devices of the nozzle, and **characterised in that** it comprises at least one rinsing sequence comprising the steps of:
- lowering the nozzle (7) into rinsing position in the rinsing container (12);
- filling the container (12) with rinsing liquid through the nozzle (7); then
- emptying the rinsing container by the emptying device (23) which is triggered by the control unit connected to the displacement and supply devices of the nozzle (7).

2. Method according to claim 1, wherein the emptying device (23) provided is a pipe (24) forming a trap, said pipe having an inlet (24a) located inside the rinsing container (12) and close to the bottom (20) thereof, a bend (24b) located near the top opening of the container and at a level (HLmax) corresponding to a maximum of liquid contained in the container, and an outlet (24c) below the level of the inlet, and wherein:
- the step of filling the container is carried out so as to reach a predetermined level of liquid below the maximum level (HLmax), and
- the emptying step is triggered by continuing filling the rinsing container (12) at least to the maximum level (HLmax).

3. Method according to claim 1 or 2, wherein the rinsing sequence comprises, between the filling and emptying steps, a stirring step during which the free end (7a) of the nozzle is moved alternately up and down in the rinsing container (12), or during which the nozzle (7) supplies steam in the rinsing container.

4. Method according to any of the preceding claims, wherein the rinsing sequence further comprises, before the emptying step, a dripping step during which the free end (7a) of the nozzle is raised above the maximum level (HLmax) of the rinsing container and during which there is a countdown before moving to the emptying step.

5. Method for cleaning a nozzle, according to any of the preceding claims, wherein a cleaning product outlet (56) able to deliver the cleaning product into the rinsing container (12) is also provided, and wherein a cleaning sequence comprises:
- a preliminary step of delivering a predetermined dose of cleaning product; followed by:
- the steps of the rinsing sequence defined by any of the preceding claims during which the mixture of cleaning product and rinsing liquid forms a cleaning solution.

6. Cleaning method according to claim 5, wherein the delivery step of the cleaning sequence is followed immediately by displacement of the cleaning product outlet (56) from the cleaning area (25) to a storage area (59) in which said outlet is not able to deliver cleaning product into the container (12).

7. Cleaning method according to any of the preceding claims, wherein a beverage preparation sequence is followed by:
- a step of displacing the steam nozzle from a beverage preparation area (10) to the cleaning area (25) where it can be lowered into the rinsing container (12), and
- at least one rinsing sequence, and preferably two rinsing sequences.

8. Cleaning method according to claim 7, wherein said at least one rinsing sequence following a beverage preparation sequence is preceded by a cleaning sequence as defined in claim 5 or 6, if a predetermined condition is satisfied, and is followed by at least two rinsing sequences and preferably three rinsing sequences.

9. Cleaning method according to claim 8, wherein the predetermined condition is considered as being satisfied if a predetermined number of beverage preparation sequences has been carried out, or if a predetermined time has been reached since the previous cleaning sequence.

10. Cleaning method according to any of the preceding claims, wherein a calibration sequence of the displacement device is also provided, comprising the steps of:
- lowering the nozzle (7) until the free end (7a) thereof stops against the bottom (20) of the rinsing container (12), and
- identifying the stop position of the nozzle by analysing the current used by the displacement device (13);
- storing the corresponding position of the displacement device by the electronic control unit so that, during the rinsing and cleaning sequences, it lowers the nozzle by a smaller value so that it does not come into contact with the bottom of the container (12).
